# EUROPEAN PATENT APPLICATION

(11) **EP 1 018 684 A2**
(43) Date of publication of application: **12.07.2000**
(21) Application number: 99309828.4
(22) Date of filing: 07.12.1999
(51) Int. Cl.: G06F 9/44

(54) **Method and apparatus for developing event driven software**

(30) Priority: 15.12.1998 US 212069
(71) Applicant: LUCENT TECHNOLOGIES INC., Murray Hill, New Jersey 07974-0636 (US)
(72) Inventor: Lane Thompson, Kenneth, Watchung, New Jersey 07060 (US); Winterbottom, Philip Steven, Watchung, New Jersey 07060 (US)
(74) Representative: Watts, Christopher Malcolm Kelway, Dr.

(57) **Abstract**

A programming technique for defining, structuring, and developing event driven software. More particularly, event driven software is structured in two basic parts: control-sensitive code and non-control-sensitive code. Control sensitive code includes the identification of control states, the events that are generated and that must be recognized, and the responses to the arrival of particular events in particular states. Further, within the control-sensitive code defining the system, control states are uniquely identified throughout such program code with a single symbol. The non-control-sensitive code, specified separately from the control sensitive code, is directed at the necessary normal sequential code for programming the event driven system such as the invocation of device drivers, the control of peripheral devices, the updating of tables, variable definition, etc. Advantageously, the technique allows the software developer to structure the event driven software application source code such that a clear distinction is made between core control features, i.e., states, events and responses, and extraneous details not directly impacting the behavior of the event driven system. As such, the programmer can readily determine the exact execution flow from control state-to-control state directly from a cursory examination of the program code itself as the individual control states have a strong visual context.

## Description

### Field of the Invention

The present invention relates to computer programming and, more particularly, to a technique for developing event driven application programs.

### Background of the Invention

In well-known event driven software systems (also referred to in the art as "reactive systems"), certain functionality occurs when an event is generated and communicated to an executing process performing particular actions based upon the occurrence of the particular event. More particularly, event driven software is used to define the behavior of a system, e.g., a computer, in response to events that are generated by other systems, machines or peripheral devices connected thereto. Well-known examples of event driven systems include: telecommunications applications, call-processing software, data communications software, device drivers, and computer interface applications. As will be appreciated, these types of event driven systems are state oriented. That is, in each state of a system, one specific event from a predefined set of events is expected to occur, and the system is designed to respond to the event in a well-defined manner.

Briefly, as is well-known, a state machine converts a time series of event stimuli or input data through some function into a time series of responses or output data. For example, in an event driven system, at each point in time, each machine is in a particular so-called "control state" which defines the events that are expected to be generated by other machines, and the type of responses that are to be generated upon the arrival of each such event. Typically, the response includes the execution of a finite piece of program code, the generation of new events, and the identification of a new control state for the particular machine responding to the incoming events. Thus, the state machine model of the event driven system plays a critical role in the development of the application program code by the programmer for the system.

Typically event driven application software is written in higher level general-purpose programming languages such as the well-known "C" or "C++" programming languages, or a special-purpose language such as the well-known ITU Systems Description Language ("SDL"). In developing the actual program code for such systems it is common to describe the behavior of the relevant machines in terms of state machines. Using a higher level programming language, e.g., C, software programmers will write event driven software code for the particular application. Typically, the software program development begins by reviewing a so-called system specification which provides a logical description of the desired operations for the application. Working from the specification, one or more programmers will write the necessary code to implement the operations.

This conventional programming process results in an application program which contains no particular visual context amongst and between the various control states of the event driven system. That is, the program code can be viewed as one large "flat" file with a series of program instructions. Further, as the original specification changes during program development, e.g., additional functionality is added to the system, the requisite program code and additional control states are typically added to the source program in a somewhat arbitrary order. In order for a programmer to understand the logical flow from control state-to-control state directly from the program source code it is necessary to manually trace the execution thread through the source, e.g., tracing branch instructions or "goto" statements. As will appreciated, the tracing of such logical flow, particularly in very large source code programs, is a tedious and time consuming task.

Therefore, a need exists for a technique that mitigates the above-described problems in the art and improves the development and programming of event driven software.

### Summary of the Invention

The present invention provides a programming technique for defining, structuring, and developing event driven software. More particularly, we have recognized that event driven software can be structured in two basic parts which we refer to herein specifically as control-sensitive code and non-control-sensitive code. In accordance with the invention, control sensitive code includes the identification of control states, the events that are generated and that must be recognized, and the responses to the arrival of particular events in particular states. Further, within the control-sensitive code defining the system, control states are uniquely identified throughout such program code with a single symbol. The non-control-sensitive code, specified separately from the control sensitive code, is directed at the necessary normal sequential code for programming the event driven system such as the invocation of device drivers, the control of peripheral devices, the updating of tables, variable definition, etc. Advantageously, the invention allows the software developer to structure the event driven software application source code such that a clear distinction is made between core control features, i.e., states, events and responses, and extraneous details not directly impacting the behavior of the event driven system. As such, the programmer can readily determine the exact execution flow from control state-to-control state directly from a cursory examination of the program code itself as the individual control states have a strong visual context. That is, in accordance with the invention, the program source code is structured and defined such that the control states which define the event driven application have a direct and logical, i.e., causal, relationship which is immediately evident from an examination of the source code itself.

### Brief Description of the Drawings

FIG. 1 is a block diagram of an illustrative event driven system;
FIG.'s 2 and 3 show an example of a conventional C source code program for an illustrative telecommunications call processing application useful in the illustrative event driven system of FIG. 1;
FIG. 4 shows a flowchart of illustrative operations for software development in accordance with the principles of the invention;
FIG.'s 5 and 6 show an illustrative C source code program, structured and defined in accordance with the invention, for the illustrative telecommunications call processing application of FIG.'s 2 and 3;
FIG.'s 7 and 8 show a translated source code program derived, in accordance with the principles of the invention, from the illustrative C source code program of FIG.'s 5 and 6;

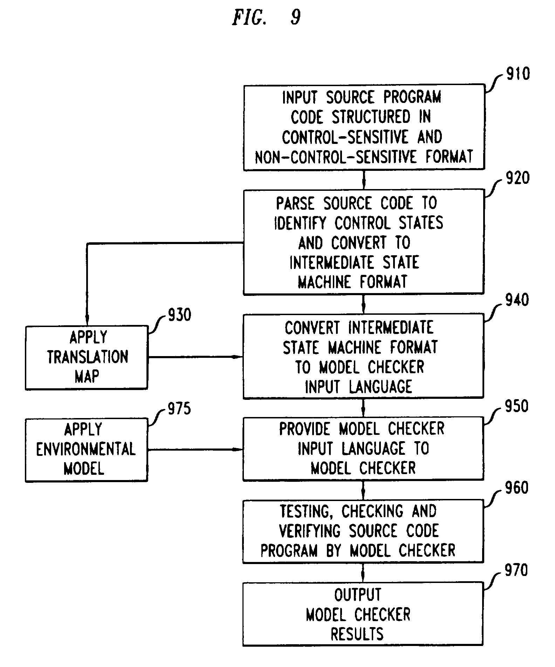

FIG. 9 shows a flowchart of illustrative operations for testing event driven software;

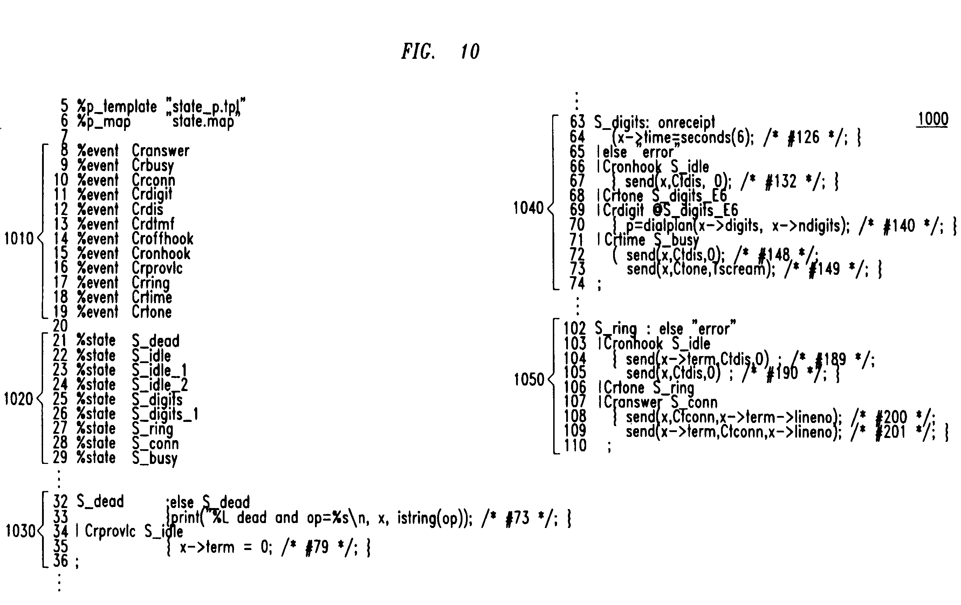

FIG. 10 shows intermediate state machine code derived from the illustrative C source code program of FIG.'s 5 and 6;

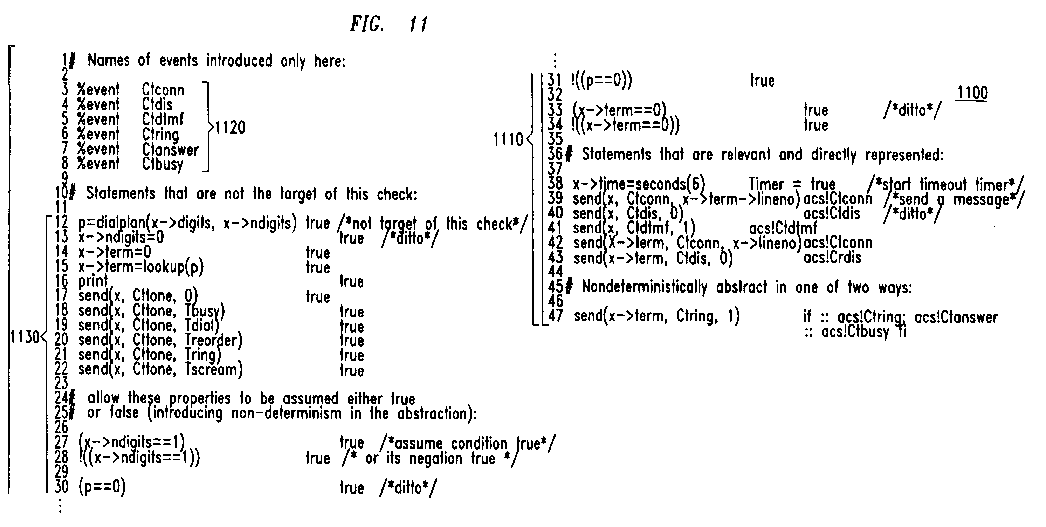

FIG. 11 shows an illustrative map for the event driven system defined by the illustrative C source code program of FIG.'s 5 and 6;
FIG.'s 12 and 13 show model checker input language derived from applying the illustrative map of FIG. 11;

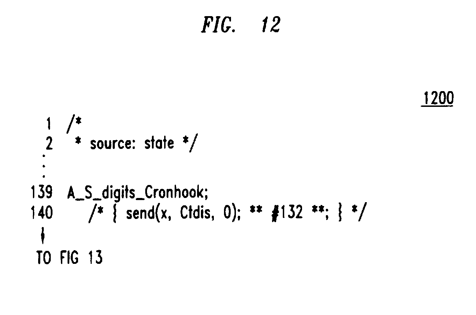

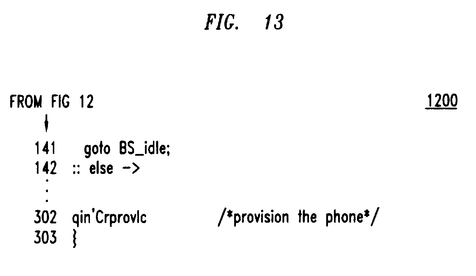

FIG. 14. shows an illustrative set of library functions for use with the model checker input language of FIG.'s 12 and 13;

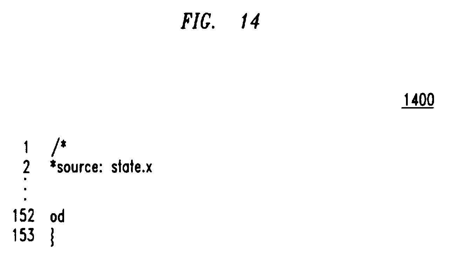

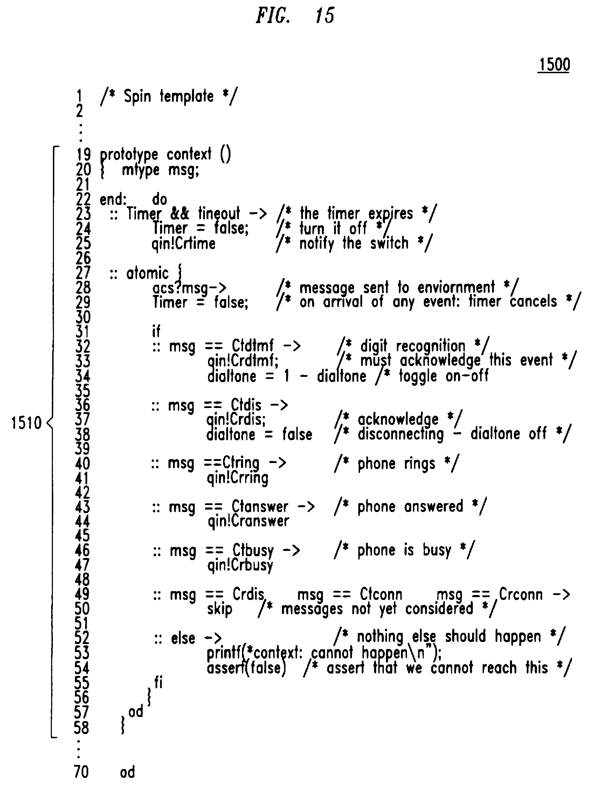

FIG. 15 shows an illustrative environmental model for the telecommunications processing application described in FIG.'s 5 and 6;

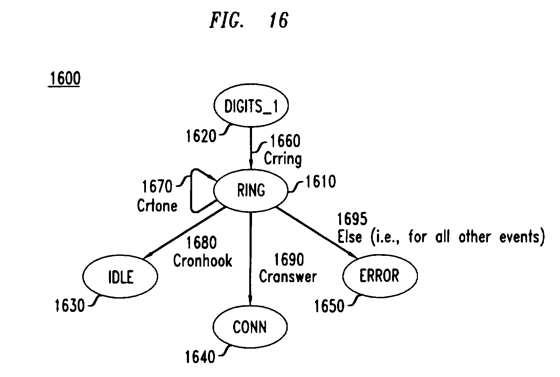

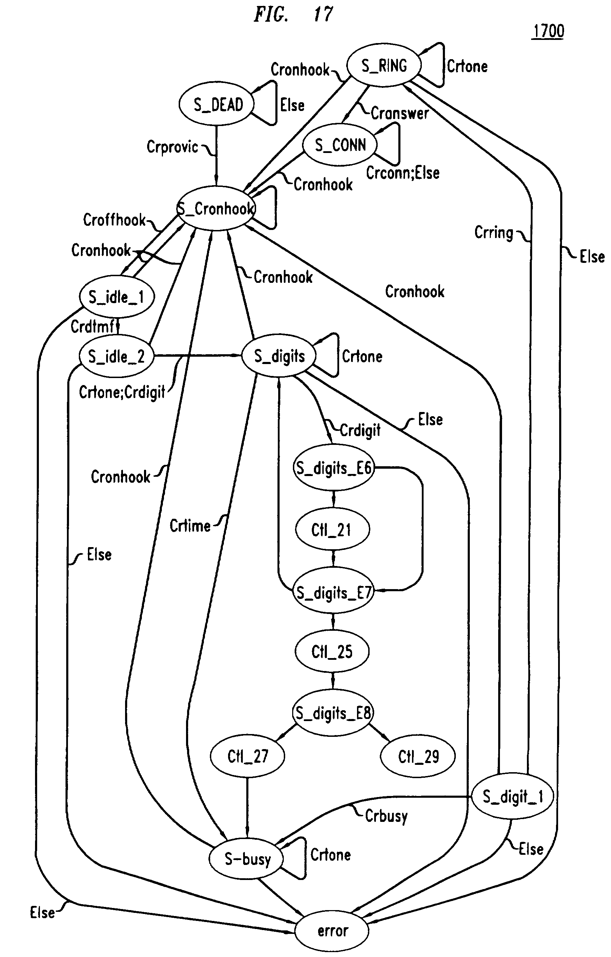

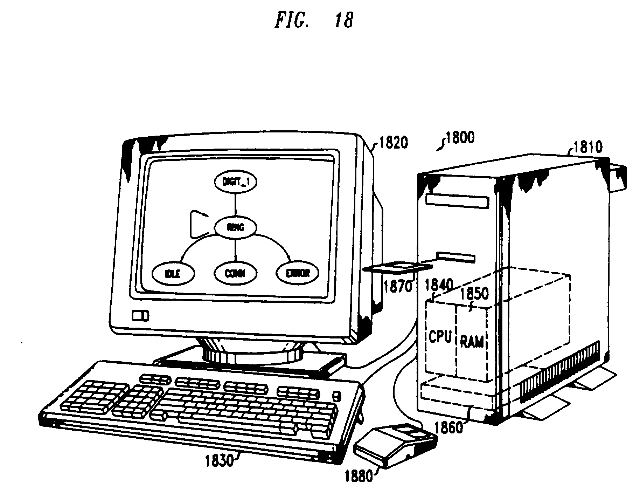

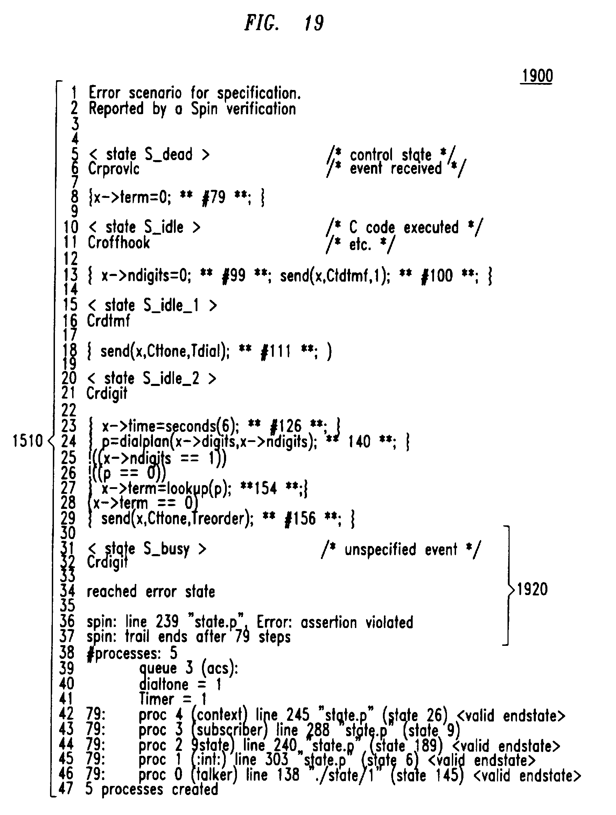

FIG. 16 shows an illustrative automaton model for a particular control state defined by the telecommunications processing application of FIG.'s 5 and 6;
FIG. 17 shows an illustrative full automaton model of the complete telecommunications processing application described in FIG.'s 5 and 6;
FIG. 18 shows an illustrative computer system 1800 useful in executing event driven software code which is specified and written in accordance with the present invention; and
FIG. 19 shows an illustrative error trace, generated in accordance with the principles of the invention, for the telecommunications processing application described in FIG.'s 5 and 6.

Throughout this disclosure, unless otherwise noted, like elements, blocks, components or sections in the figures are denoted by the same reference designations.

### Detailed Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all other rights with respect to the copyrighted works whatsoever.

The present invention provides a programming technique for defining, structuring, and developing event driven software. More particularly, we have recognized that event driven software can be structured in two basic parts which we refer to herein specifically as control-sensitive code and non-control-sensitive code. In accordance with the invention, control sensitive code includes the identification of control states, the events that are generated and that must be recognized, and the responses to the arrival of particular events in particular states. Further, within the control-sensitive code defining the system, control states are uniquely identified throughout such program code with a single symbol. The non-control-sensitive code, specified separately from the control sensitive code, is directed at the necessary normal sequential code for programming the event driven system such as the invocation of device drivers, the control of peripheral devices, the updating of tables, variable definition, etc. Advantageously, the invention allows the software developer to structure the event driven software application code such that a clear distinction is made between core control features, i.e., states, events and responses, and extraneous details not directly impacting the behavior of the event driven system. As such, the programmer can determine the exact execution flow from control state-to-control state directly from a cursory examination of the program code itself as the individual control states have a strong visual context. That is, in accordance with the invention, the program source code is structured and defined such that the control states which define the event driven application have a direct and logical, i.e., causal, relationship which is immediately evident from an examination of the source code itself.

The present invention can be embodied in the form of methods and apparatuses for practicing those methods. The invention can also be embodied in the form of program code embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. The invention can also be embodied in the form of program code, for example, in a storage medium, loaded into and/or executed by a machine, or transmitted over some transmission medium, such as over electrical wiring or cabling, through fiber optics, or via electromagnetic radiation, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

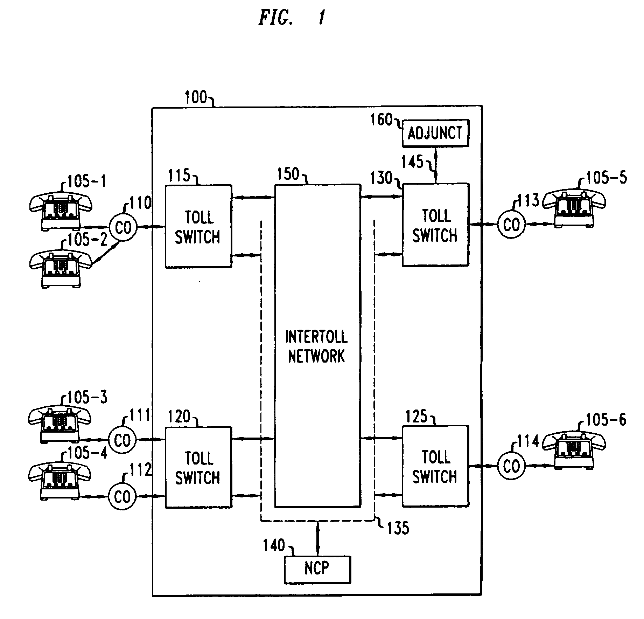

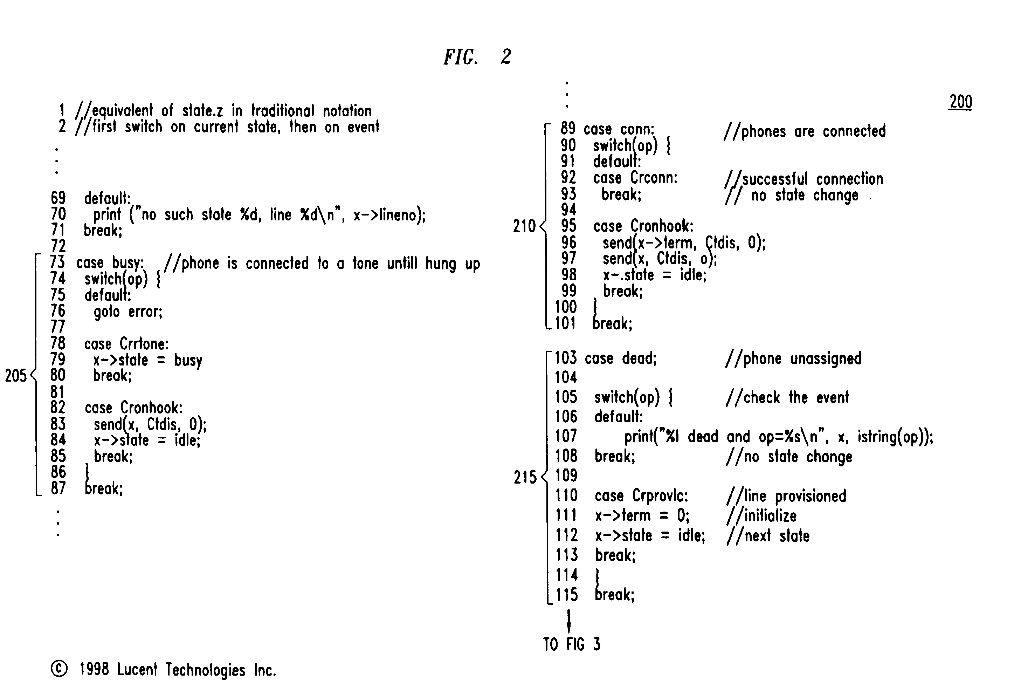

In order to provide context and facilitate an understanding of the invention, an overview and discussion of an illustrative event driven system will now be presented. In particular, FIG. 1 shows a block diagram of an illustrative communications network which, as will appreciated, contains a myriad of event driven applications. Communications network 100, e.g., is a public switched telephone network such as the well-known inter-exchange network of AT&T Corp., that provides long distance telephone services for its subscribers. These subscribers access communications network 100 through, e.g., communications devices 105-1 through 105-6, which are, e.g., customer premise equipment, wired telephones, personal computers, cellular telephones, pagers and facsimile machines. Communications network 100 includes, *inter alia,* a plurality of toll switches, e.g., shown in FIG. 1 as toll switches 115, 120, 125, and 130. These toll switches may be any of the well-known types of telecommunications switching equipment, e.g., the No. 4ESS® (Electronic Switching System) or the No. 5ESS® available from Lucent Technologies Inc., 600 Mountain Ave., Murray Hill, NJ 07974. As shown in FIG. 1, each of toll switches 115, 120, 125, and 130 are connected to a number of other switches via a so-called inter-toll network shown as block 150. Each toll switch may also be connected to multiple central offices ("CO"), e.g., CO's 110 through 114. The operation of such telecommunications networks and CO's is well-known, e.g., as discussed in "Engineering and Operations in the Bell System", Second Edition, Eighth Printing, International Standard Book Number 0-932764-04-5, 1993, and the detail of which will not be further discussed herein. In short, a CO is arranged to extend to a corresponding toll switch of communications network 100 a telephone call originating at, e.g., communications device 105-1, from which a calling party has dialed a particular telephone number. The CO, e.g., CO 110, is further arranged to extend the call connection to, e.g., communications device 105-6 associated with the called party and to the CO, e.g., CO 114, which receives the extension of the call from the corresponding toll switch, e.g., toll switch 125.

Toll switches 115, 120, 125 and 130 of communications network 100 are interconnected via data link 135, which may be, e.g., the well-known System Signaling 7 ("SS7") network. Communications network 100 is arranged so that the toll switches may exchange data messages with one another to establish a connection between a calling party (e.g., communications device 105-1) and a called party (e.g., communications device 105-6), via communications network 100. That is, the connection is made by extending a call through communications network 100 until the call is completed (e.g., the called party answers the call by going "off-hook") between the calling party and the called party. Communications network 100 further includes a number of centralized databases commonly known as Network Control Points ("NCPs"), a single one of which is shown as NCP 140. As is well-known, NCP's, such as NCP 140, are strategically positioned at various positions within communications network 100 to support various service features accessed and provided through the network such as the well-known "800" or "888" toll-free telephone number services.

As will be appreciated, communications network 100 and the various above-described elements of the network require a myriad of event driven applications. For example, call processing application programs for toll switches 115, 120, 125 and 130 must be developed to facilitate the extension of a call through network 100. In particular, for example, a calling party may wish to utilize communications device 105-1 for placing an outgoing call. Such an event driven call-processing application will include operations, i.e., control states, such as offhook, dial, idle, connect, ring, and busy, to name just a few.

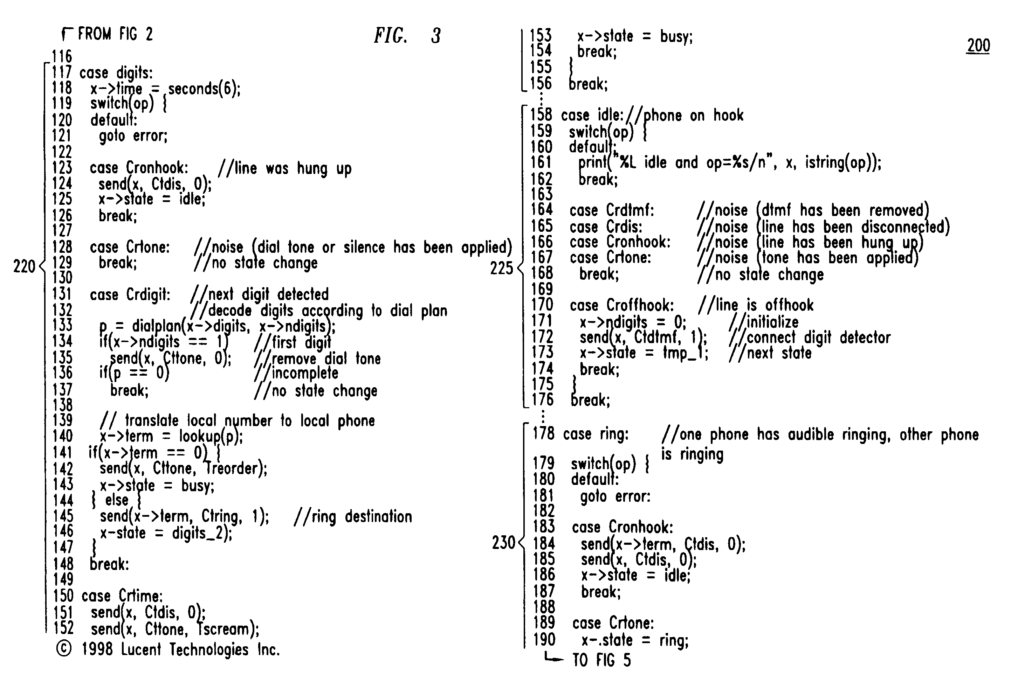

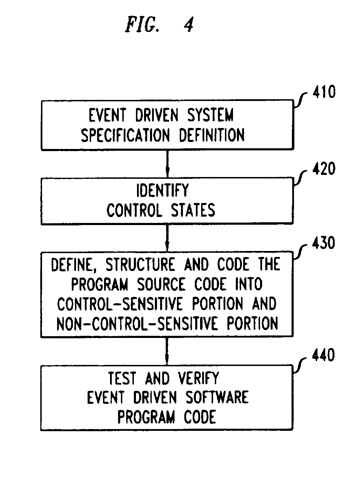

FIG. 2 and FIG. 3 show an example of a conventional C source code program 200 (delineated by individual program code line numbers 1-268) directed to such an illustrative event driven application for processing an outgoing call. As will be appreciated, source code program 200 defines several control states for the application. See, for example, code sections 205 through 230 which define operations for the following respective control states: busy, conn, dead, digits, idle, and ring. Significantly, however, an examination of source code program 200 does not provide an immediately evident view of the execution thread between the various control states. From a high level programming perspective , there is no direct or logical, i.e., causal, relationship between the various control states defined within the source program code. That is, as mentioned above, in order for a programmer to understand the logical flow from control state-to-control state directly from the program source code it is necessary to trace the execution thread through the source, e.g., tracing branch instructions or "goto" statements. As will appreciated, the tracing of such logical flow, particularly in very large source code programs, is a tedious, unilluminating, error prone, and time consuming task. For example, the source code for implementing all the requisite call processing features of communications network 100 will most likely be on the order of tens of thousands lines of code. This also leads to certain complexity in the testing of the software for so-called "bugs" and to determine whether the application program implements the desired features.

Significantly, we have recognized a novel programming technique directed to defining, structuring, and coding event driven software which mitigates certain disadvantages of the prior art. That is, we have recognized that event driven software can be structured in two basic parts which we refer to herein specifically as control-sensitive code and non-control-sensitive code. In accordance with the invention, control sensitive code includes the identification of control states, the events that are generated and that must be recognized, and the responses to the arrival of particular events in particular states. Further, within the control-sensitive code defining the system, control states are uniquely identified throughout such program code with a single symbol. The non-control-sensitive code, specified separately from the control sensitive code, is directed at the necessary normal sequential code for programming the event driven system such as the invocation of device drivers, the control of peripheral devices, the updating of tables, variable definition, etc.

Advantageously, the invention allows the software developer to structure the event driven software application code such that a clear distinction is made between core control features, i.e., states, events and responses, and extraneous details not directly impacting the behavior of the event driven system. As such, the programmer can determine the exact execution flow from control state-to-control state directly from a cursory examination of the program code itself as the individual control states have a strong visual context. That is, in accordance with the invention, the program source code is structured and defined such that the control states which define the event driven application have a direct and logical, i.e., causal, relationship which is immediately evident from an examination of the source code itself.

In accordance with the preferred embodiment of the invention, a programming extension to the well-known ANSI-standard C programming language is adopted for facilitating the definition, structure and coding of event driven software in accordance with the invention. More particularly, in accordance with the preferred embodiment of the invention, the extension to the ANSI-standard C programming language consists of a single symbol, illustratively chosen to be the well-known ASCII symbol "@", and used for labeling all control states within the control sensitive portion of the program code. That is, the symbol "@" is used as the initial character of all labels that correspond to control states within the program source code. Thus, in accordance with the invention, a program statement prefixed with the "@" label identifies a control state in the program code whereby the current execution of the event driven system waits for the arrival of the next event. Following the arrival of the next event, execution of the subsequent program code follows along with the encoding of the required response to that event, and concluding with a transition to the new, uniquely defined control state. As will be appreciated, the response and the new control state, can be different for each event being processed depending upon operational issues such any state information stored in internal tables, variables, device responses, and the like.

FIG. 4 shows a flowchart of illustrative operations for software development in accordance with the principles of the invention. More particularly, a specification for the event driven system to be programmed is defined (block 410), e.g., by the system engineer. As will be appreciated by those skilled in the art, such a specification provides a description of the overall application, e.g., event driven system, for which a software program is to be written and implemented. From the system specification, the control states for implementing the event driven system under development can be identified (block 420) which, in turn, leads to the identification of the events which will be generated and that must be recognized, and the responses to the arrival of particular events in particular states. As such, in accordance with the invention, the definition, structuring, and coding (block 430) of the source code program is divided into two parts, as discussed above, the control-sensitive code and the non-control-sensitive-code.

In accordance with the invention, within the control-sensitive code defining the system, control states are uniquely identified throughout such program code with a single symbol. As discussed above, in accordance with the preferred embodiment of the invention, the symbol "@" is used as the initial character of all labels that correspond to control states within the control-sensitive portion of the overall program source code. Thus, in accordance with the invention, a program statement prefixed with the "@" label identifies a wait-state in the program code, where the current execution of the event driven system waits for the arrival of the next event. Further, the non-control-sensitive code, specified separately from the control sensitive code, is directed at the necessary normal sequential code for programming the event driven system such as the invocation of device drivers, the control of peripheral devices, the updating of tables, variable definition, etc.

Advantageously, the invention allows the software developer to structure the event driven software application code such that a clear distinction is made between core control features, i.e., states, events and responses, and extraneous details not directly impacting the behavior of the event driven system. Thus, one practical result of applying the principles of the invention is the programmer can determine the exact execution flow from control state-to-control state directly from a cursory examination of the program code itself as the individual control states have a strong visual context. That is, in accordance with the invention, the program source code is structured and defined such that the control states which define the event driven application have a direct and logical, i.e., causal, relationship which is immediately evident from an examination of the source code itself. Significantly, our present invention leads to further advantages in the testing and verifying of the event driven software (block 440) to determine if the software satisfies the desired properties as specified by the user. In particular, it is the testing of such event driven software that the invention set forth in the co-pending, commonly assigned patent application entitled "Method and Apparatus for Testing Event Driven Software," Application Serial No. , filed on even date herewith, (referred to hereinafter as "the Testing Event Driven Software application") is directed and further discussed below in greater detail.

As mentioned above, the present invention allows the software developer to structure the event driven software application code such that a clear distinction is made between core control features, i.e., states, events and responses, and extraneous details not directly impacting the behavior of the event driven system. For example, FIG.'s 5 and 6 show an illustrative C source code program 500 (delineated by individual program code line numbers 1-258), structured and defined in accordance with the invention, for the illustrative telecommunications call processing application of FIG.'s 2 and 3. In particular, control states 510 through 555 are delineated, in accordance with the preferred embodiment, with the symbol "@"as the initial character of all labels thereby designating the control states within the control-sensitive portion of the overall source code program 500. Thus, source code program 500, in accordance with the invention, has a direct and logical, i.e., causal, relationship between the individual control states, i.e., control states 510-555. Significantly, the programmer can determine the exact execution flow from control state-to-control state directly from a cursory examination of the program code itself as the individual control states have a strong visual context.

For example, through a cursory examination of source code program 500, one can quickly and exactly ascertain when viewing the code at control state 535, i.e., the "@digits" control state, how that particular control state is reached. That is, invocation and execution of this particular event driven system, i.e., the processing of an outgoing call, a control state for allowing the dialing of digits on a telephone device is processed. Control state 535 is such a state and is clearly identifiable beginning at line 125 of code 500, in accordance with preferred embodiment of the invention. In viewing control state 535, one can readily see that the execution flow in reaching this control state is directly through the above-coded control states 510 through 530, respectively. Further, if source code program 500 needs to be revised to add another control state, e.g., to add some further application-specific functionality, the new control state can be placed at the exact location within the existing control state hierarchy without losing context between all the control states.

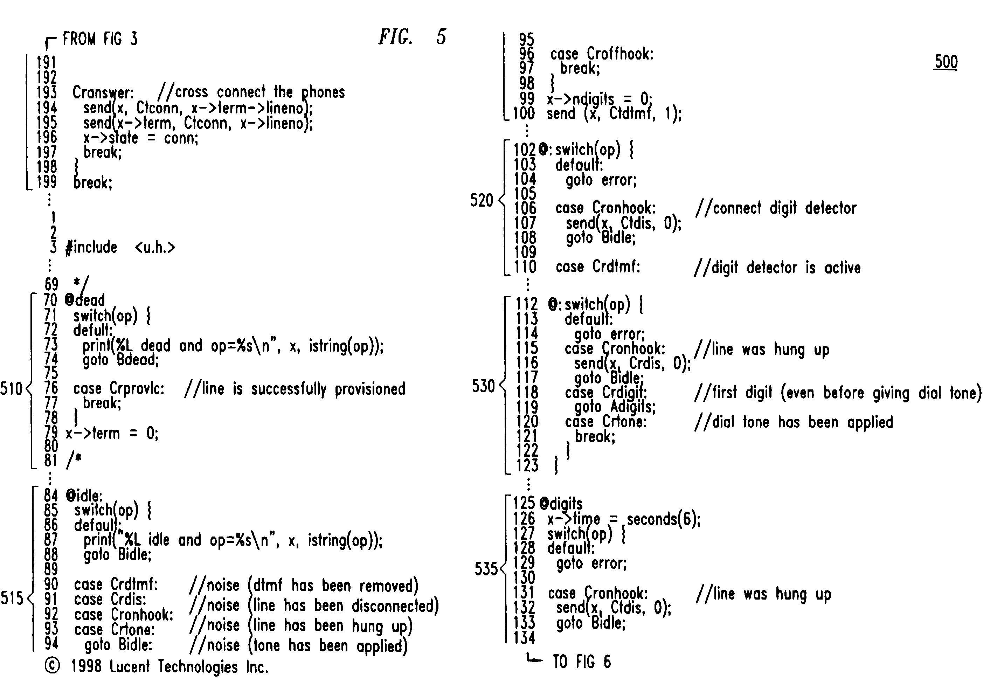

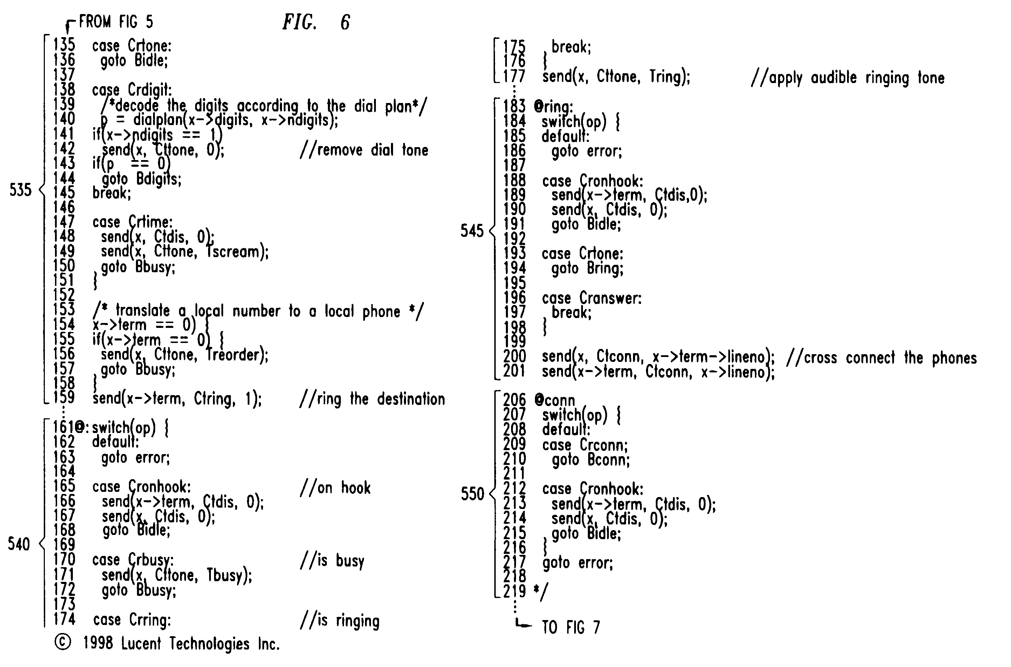

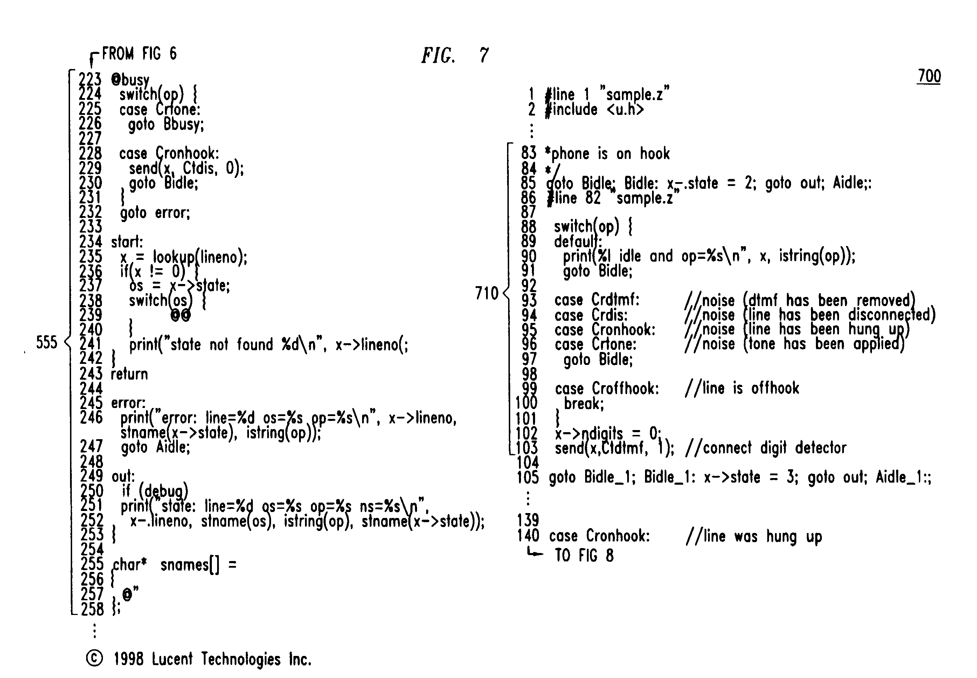

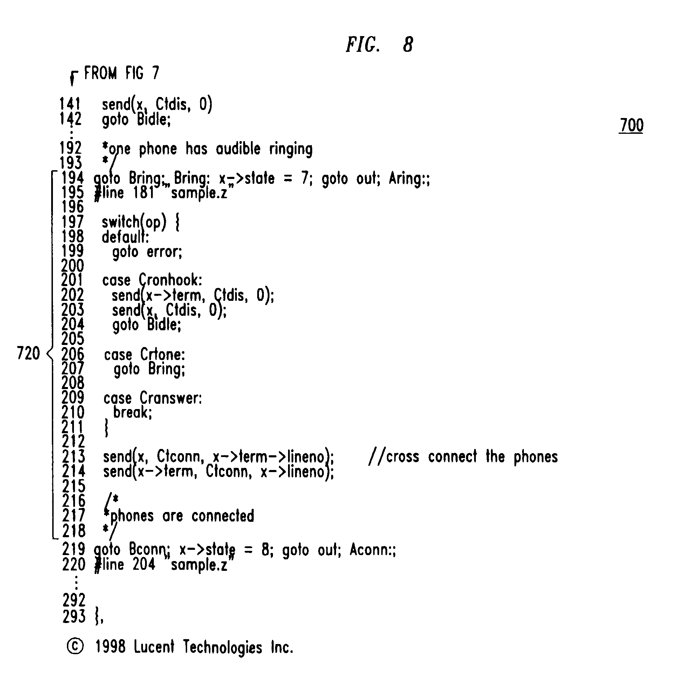

This logical, i.e., causal, relationship among control states and the clear execution flow directly perceived from viewing source code program 500 is further evident in FIG.'s 7 and 8 which show a translated source code program 700 derived from the illustrative C source code program 500 of FIG.'s 5 and 6. As mentioned above, in accordance with the preferred embodiment of the invention, the extension to the ANSI-standard C programming language consists of a single symbol illustratively chosen to be the symbol "@" and used for labeling all control states within the control sensitive portion of the program code. The mechanics, i.e. the translator, of the actual translation of the code itself will be readily apparent to those skilled in the art. Thus, translated source code program 700 is the actual fully translated ANSI-standard C representation of the event driven application program in accordance with the invention. For example, control state 515 (i.e., "@idle") of FIG. 5 is translated to program code section 710, and control state 545 (i.e., "@ring") is translated to program code section 720.

The above-described advantages of the present invention provide significant utility in the computer programming arts, in particular, to the definition, structure, and development of event driven software application programs. Of course, critical to the successful development of any application program is the effective testing and verification of the program code against a defined set of expected properties. As mentioned previously, it is the testing of event driven software that the various aspects of the invention set forth in "the Testing Event Driven Software application", as cited above, are directed and which now will be discussed in greater detail.

The various aspects of the invention in "the Testing Event Driven Software application" are directed to the efficient testing of event driven software and making it possible to track the validity of future changes to the program code, as part of the normal maintenance, extension and revision process to the source code. FIG. 9 shows a flowchart of illustrative operations for testing event driven software in accordance with the principles of that invention. More particularly, in accordance with the preferred embodiment of the invention, event driven software code is specified and written in accordance with the principles of the instant co-pending, commonly assigned patent application as described above. That is, in accordance with the preferred embodiment, the source code program is defined and structured into control-sensitive and non-control-sensitive format (block 910.) In accordance with the invention, the event driven source code program is parsed to extract the control states defined in the source program, and to convert the source code into an intermediate state machine format (block 920.) Thereafter, in accordance with the invention, the intermediate state machine format is converted into a automata-based format for modeling checking purposes.

In particular, in accordance with the preferred embodiment, the intermediate state machine format is converted into an annotated automaton model in the input language of a specific model checker (block 940). In accordance with the preferred embodiment, the model checker tool is the well-known "SPIN" model checker developed by and available from the Bell Laboratories Division of Lucent Technologies Inc., and as described in more detail, e.g., in G. J. Holzmann, The Model Checker SPIN, *IEEE Trans. On Software Engineering,* Vol. 23, No. 5, pp. 279-295, May 1997, which is hereby incorporated by reference for all purposes. Importantly, in accordance with the invention, each statement from the source code program is mapped (block 930) onto an abstraction within the automaton model. The mapping, discussed below in greater detail, is facilitated by a translation map which is defined, illustratively by a user, at the initial stage of the verification process. The map need not be revised thereafter unless new types of instructions are introduced, e.g., after revisions are made to repair programming faults, into the source program. The mapping, *inter alia,* dictates a fixed translation of the particular statement into the target language of the model checker. Thus, instructions that appear in the map are systematically converted into the automaton model wherever such instructions appear in the source code.

In addition to the above-described map, in accordance with the invention, a so-called environment model is defined, illustratively by a user, which encapsulates a minimal set of assumptions that must be made about the particular operating environment in which the event driven application is executed. More particularly, as the model checker input language is provided (block 950) to the model checker, e.g., SPIN, the environmental model is applied (block 975). As a result, in accordance with the preferred embodiment of the invention, the verification of the properties of the event driven system is made subject to the environmental model during the testing and checking (block 960) of the event driven software by the model checker. Thereafter, the testing and checking results are output, in a well-known manner, by the model checker (block 970) for determining whether the event driven system conforms with the user's desired execution properties and behaviors.

Important to the above-described testing and checking of event driven software, in accordance with the invention, is the efficient parsing of the event driven source code program to extract the control states defined in the source program, and converting the source code into an intermediate state machine format (see, e.g., FIG. 9, block 920.) That is, to perform model checking efficiently, one must be able to identify the control states, events and actions (i.e., responses) of the event driven system. Thus, a further aspect of the invention is directed to our realization of a formal specification which facilitates the description of an event driven system for model checking purposes, as will now be discussed.

In accordance with this aspect of the invention, a format is defined which facilitates the specification of an event driven system. In accordance with various embodiments of the invention (discussed further below), the specification may be converted into a target programming language, e.g. C., for direct compilation and execution. In accordance with still further embodiments of the invention, the specification is converted, using the above-described mapping, into a logical verification model such as the input language of the SPIN model checking tool. As will be appreciated by those skilled in the art, grammar specification tools are well-known. For example, the YACC (yet-another-compiler-compiler) is one well-known UNIX software utility tool (see, e.g., A. T. Schreiner, Using C with *curses, lex* and *yacc,* Prentice-Hall Inc., Englewood Cliffs, NJ 07632, 1990) which assists programmers in the development of C routines which analyze and interpret an input stream, and also facilitates the development of compilers and interpreters. Similar to YACC, our specification format provides a formalism for describing the grammar of a language, and automating the generation of a compiler for that language. However, our specification format, in accordance with the invention, is directed towards the specification of the behavior of a system.

More particularly, an illustrative grammar definition, in accordance with the preferred embodiment of the invention is as follows: 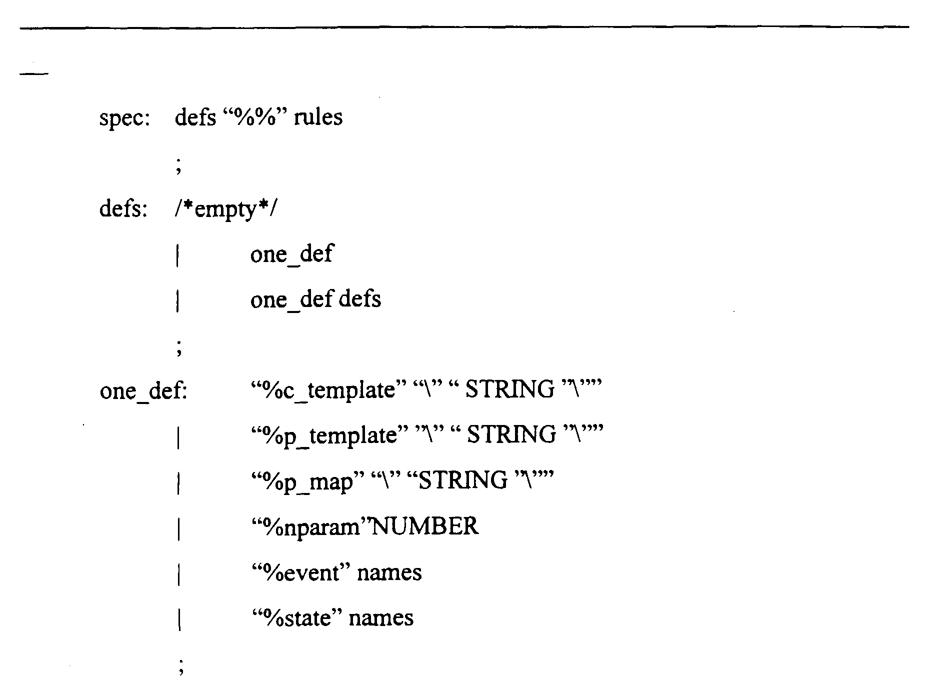 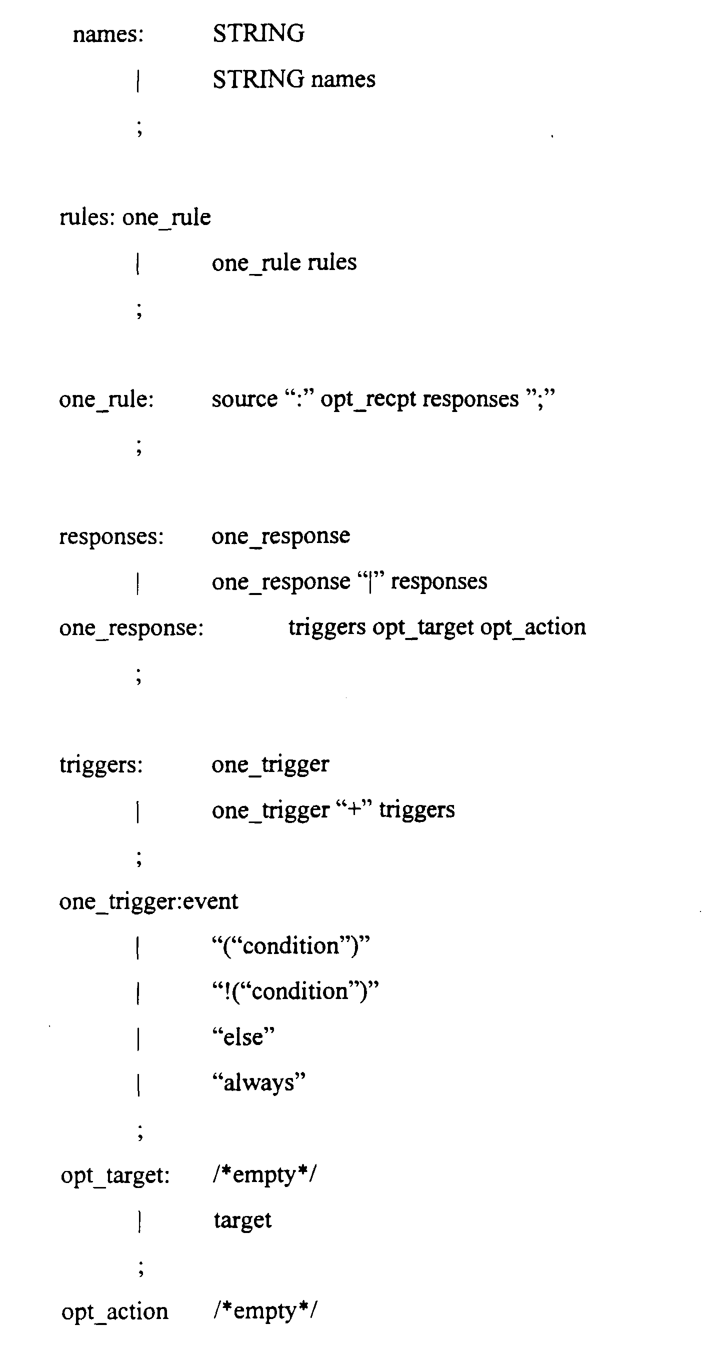 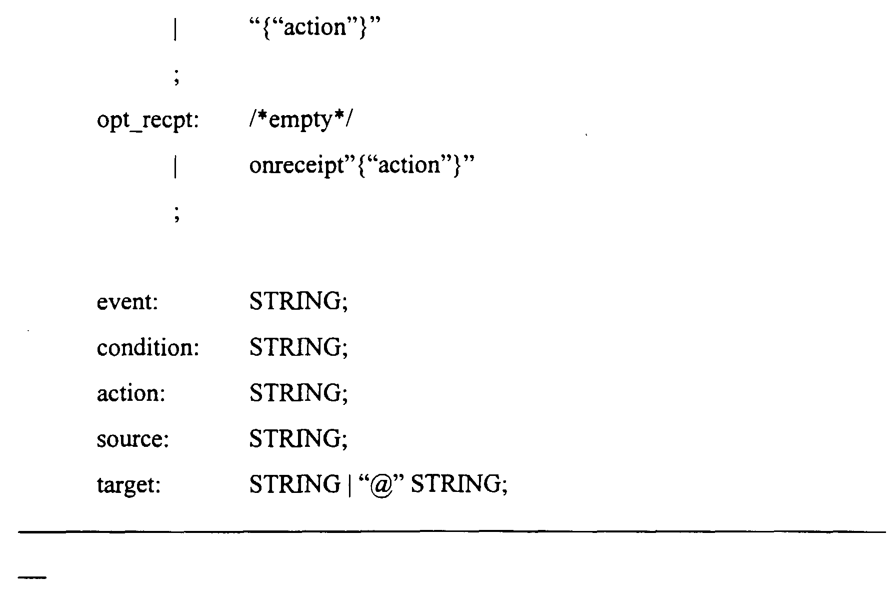 The above illustrative grammar definition provides the framework for defining a specification for a particular application, e.g., an event driven system, in accordance with the principles of the invention. All items in the illustrative grammar definition which appear in double quotes are terminal symbols (keywords, literals, tokens). The capitalized word STRING represents an alphanumeric string, and NUMBER represents a sequence of one or more digits. Alternatives are separated by a vertical bar "|", i.e., pipe symbol, and each grammar rule is terminated by a semicolon.

In accordance with the preferred embodiment, the specification format consists of two parts: a declaration and a specification. The declaration part of the specification of the preferred embodiment, contains, *inter alia,* a listing of symbolic names for all events that will be used in the specification. For example, the following code fragment is an illustrative declaration in accordance with the preferred embodiment: 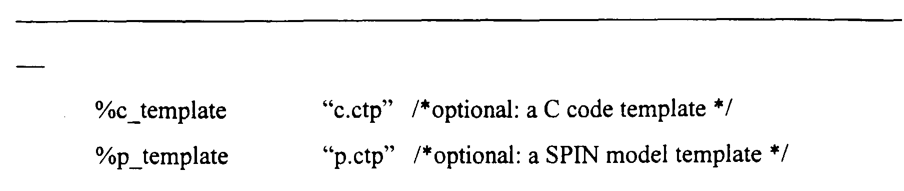 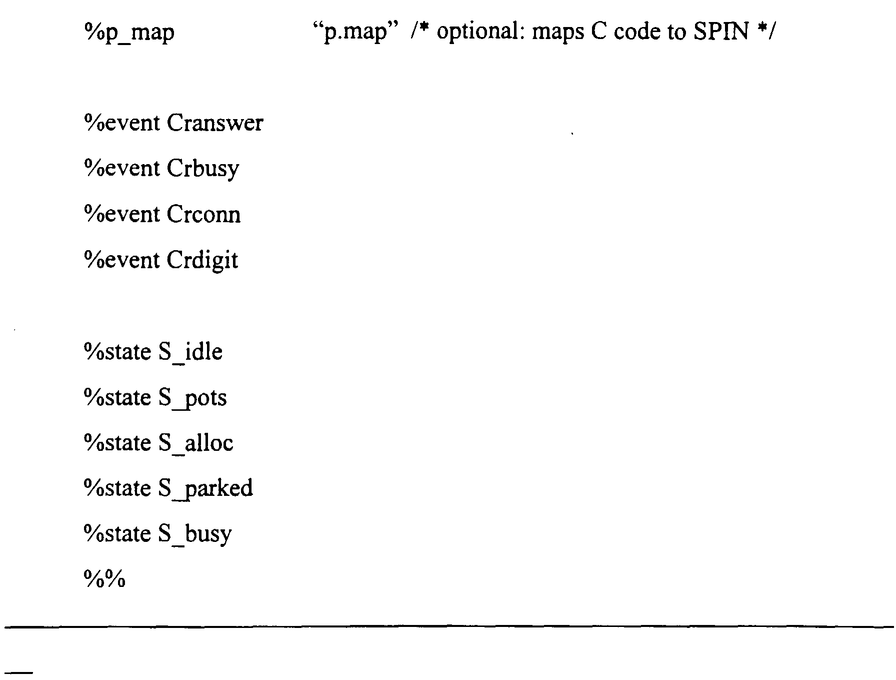 In the above illustrative declaration, all words that begin with a percent "%" symbol are keywords. For example, "% c_template" defines the name of a file that contains a template for the final implementation of the code in C, i.e., the target implementation language of the preferred embodiment. Further, the "%p_map" statement gives the name of a file that can be used to define a relation between the C code from the implementation and the abstract representations of the code, i.e., mapping, used for verification with the model checker. In addition, the illustrative declaration above further contains a listing of symbolic names for all events, e.g., "%event Cranswer", that will be used in the specification, as well as, a list of state names for all of the control states, e.g., "%state S_idle", in the specification.

The core of the specification format, in accordance with the invention, is the specification of a set of transition rules for the event driven system wherein the state specification consists of a sequence of transition rules specified in the following notation: 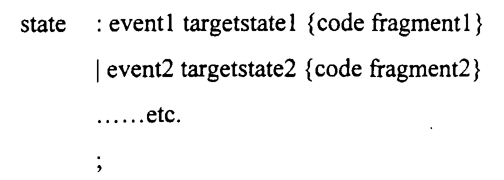 For example, the following code fragment is an illustrative control state specification in accordance with the preferred embodiment: 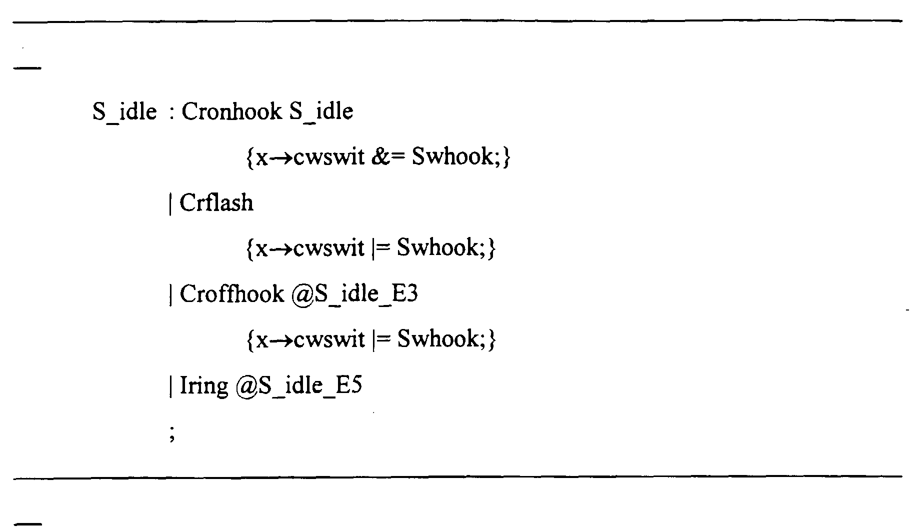 In the above illustrative control state specification, the transition rule begins with the name of the state, e.g., "S_idle", followed by a colon. After the colon, a series of possible transitions out of this state are listed. The individual transitions are separated from each other by a vertical bar "|". Each complete transition has three parts: the name of an event that triggers the response, the name of a new state that is reached after the response has been performed, i.e., "the next-state", and the response itself. The next-state part of the specification defines where control moves after the response has been completely processed, and contains the name of either a predefined control state or a so-called internal state. If two events have the same next-state and response, in accordance with further embodiments of the invention, an abbreviated notation can used such as: 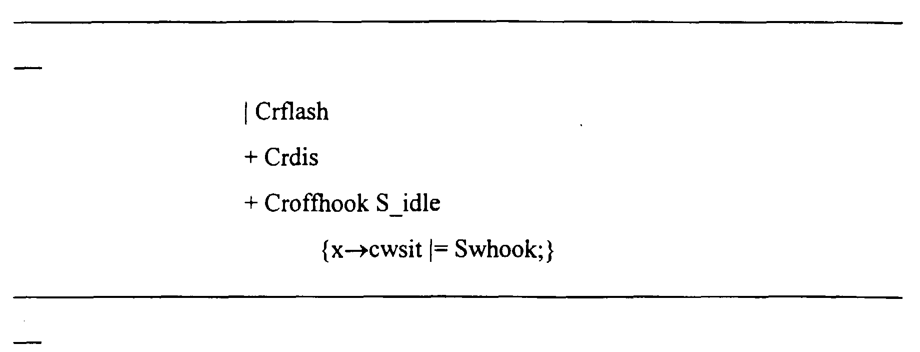 Using the above noted abbreviated notation, the events Crflash, Crdis, and Croffhook will all generate the same response, i.e., the execution of the specified code fragment and a transition to the state "S_idle".

As will be appreciated, the event driven system is meant to stop execution at each control state and wait for the arrival of the next event. In contrast, the event driven system passes through internal states without waiting. In addition, state names in the next-state segment of a transition rule can be prefixed with the "@" symbol (it should be noted that this particular notation is not the same as that described previously with regard to identifying control states in accordance with the principles of the present invention) to indicate that processing of the next state should continue without waiting for a next event to arrive. In such a case, the last event remains available if an event is needed to determine the behavior of the system at a next state.

With reference to the internal states mentioned above, such events encode an internal, non-event related decision of the event driven system. In accordance with the preferred embodiment of the invention, the syntax in the specification for internal events is the same as for control states, except that instead of event names, general Boolean conditions in the target implementation language are used. For example, an illustrative internal state is defined as follows: 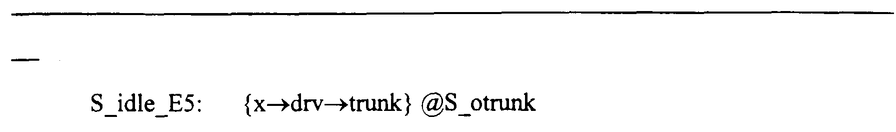 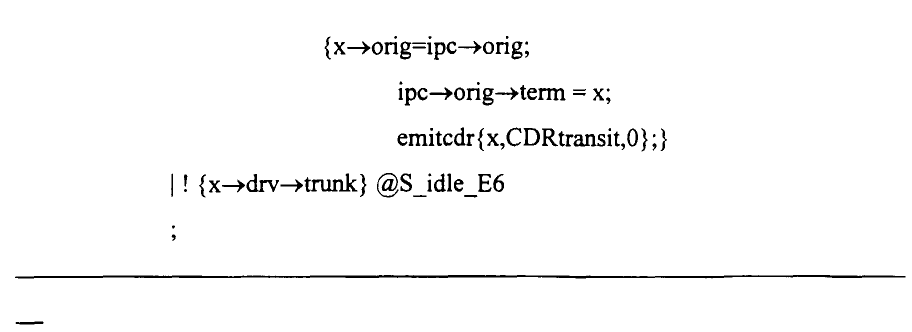 The above illustrative internal state specifies that the value of a specific field (in this case hiding two levels inside a C data structure named "x") will decide whether control moves into state "S_otrunk" or state "S_idle_E6". In the first case, the piece of action code defined after the state will be executed. In the latter case, no code is executed.

In accordance with the preferred embodiment, if the name of an event or condition is "else" this indicates that a default response will be taken when none of the explicitly listed event names or Boolean conditions apply. For example, the above illustrative internal state code fragment can also be written as follows: 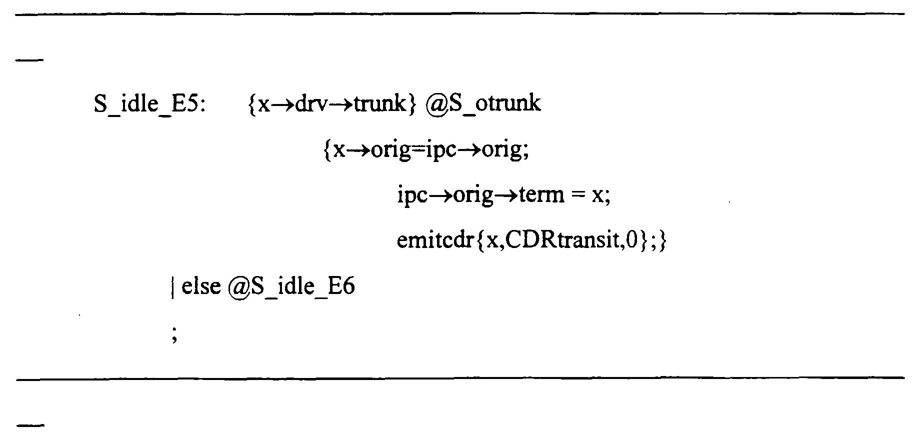 In accordance with this alternative internal state code fragment, no code fragment is executed when the condition "{x→drv→trunk}" evaluates to "false" upon reaching this state. Instead, only a transition into state "S_idle_E6" will result.

Further, with regard to the specification of the event driven system, it is sometimes useful to define a common action fragment that must be executed immediately following the reception of an event in a control state. By definition, such a code fragment is to be executed before any of the transition rules are applied. In accordance with the preferred embodiment of the invention, the keyword "onreceipt" is employed to define such common action fragments. An illustrative example of this keyword's use is as follows: 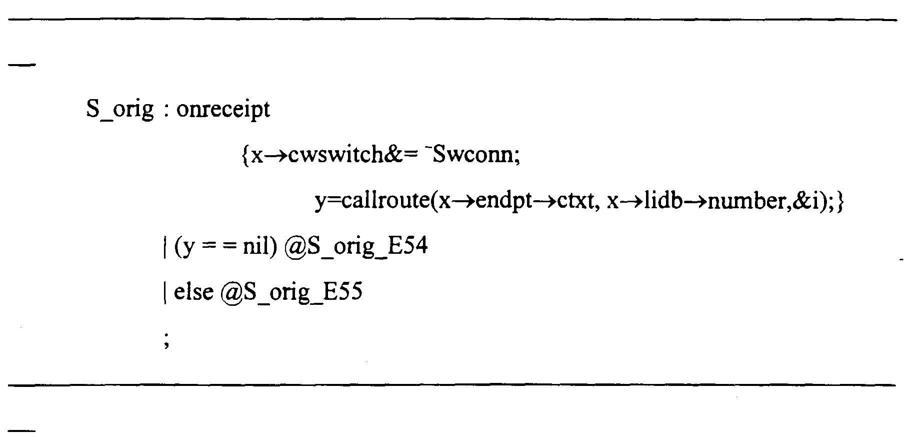 In the above illustrative code fragment, the state is an internal state so it can always be referred to in a next-state segment with the "@" prefix. The "onreceipt" code is immediately executed when reaching this state on a transition, and the condition "(y = = nil" is evaluated. If the condition is "true", the system moves into another internal state named "S_orig_E54", and if "false", the system move into internal state "S_orig_E55" where processing continues without waiting for a new event.

Finally, with regard to the specification, it is sometimes useful to bypass condition checks altogether and specify an intermediate transition state that will lead unconditionally to a successor state. In accordance with the preferred embodiment of the invention, a condition that is always true is represented by the keyword "always" as is illustrated in the following example code fragment:

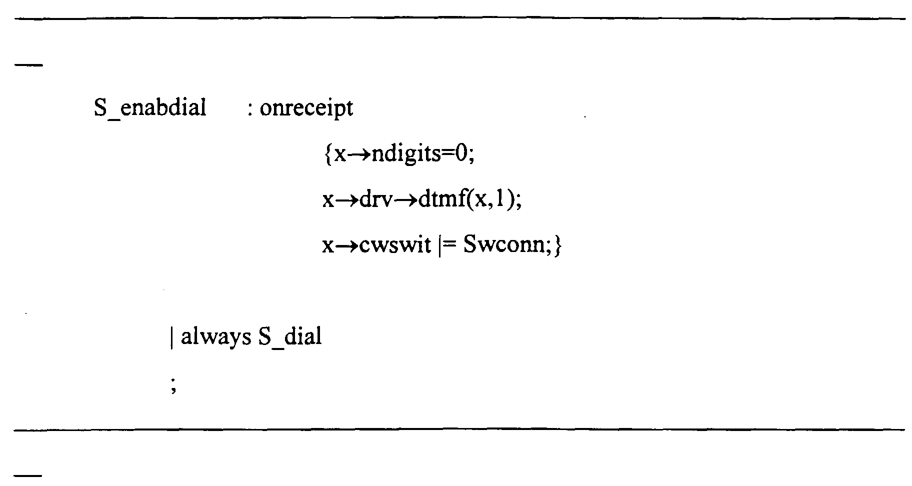

Our realization of the above-described formal specification in describing event driven systems for model checking purposes advantageously provides a specification format for describing the behavior of a event driven system.

To further illustrate the various aspects and advantages of the invention in testing event driven software, FIG. 10 shows intermediate state machine code 1000 (delineated by individual program code line numbers 1-124) derived, in accordance with the principles of the invention as discussed above, from the source code listing of the illustrative C source code program 500 of FIG.'s 5 and 6. As discussed above, to effectively perform model checking on event driven code, an accurate assessment and identification of the control states, events, and actions must occur. Advantageously, intermediate state machine code 1000, in accordance with the principles of the invention, provides a clear delineation amongst control states, events and actions. More particularly, in accordance with the preferred embodiment, a translator is applied to C source code program 500 to directly generate intermediate state machine code 1000. The actual construction of the translator will be readily understood by those skilled in the computer programming art and need not be discussed further herein. However, by structuring C source code program 500 in accordance with the present invention, the automatic identification of the relevant control states, events, and actions is made possible. Thus, the advantages of the invention set forth in "the Testing Event Driven Software application" are realized.

More particularly, a careful examination of intermediate state machine code 1000 show a clear delineation of events (see, e.g., code section 1010) and control states (see, e.g., code section 1020) of the declaration part of code 1000. Further, the clear interaction amongst and between such events, control states and the related actions is shown, in accordance with the invention, by the various state specifications (see, e.g., state specifications 1030 through 1050) within intermediate state machine code 1000. As discussed above with reference to the operations of FIG. 9, in accordance with the invention, intermediate state machine code 1000 is converted to the model checker input language for executing the testing of the subject program code. This conversion is facilitated by a translation map which is defined at the initial stage of the verification process. The mapping, *inter alia,* dictates a fixed translation of the particular statement into the target language of the model checker. Thus, instructions that appear in the map are systematically converted into the automaton model wherever such instructions appear in the original source code.

FIG. 11 shows an illustrative map 1100 for the event driven system defined by the illustrative C source code program 500. Map 1100 consists of program code 1110 (delineated by individual program code line numbers 1-47) which defines how the fixed translation of particular statements in the original source code is made into the target language of the model checker. In particular, program code 1110 is includes event definitions 1120 and code definitions 1130. For example, line 20 of program code 1110 maps every occurrence of the statement in the left hand column onto the abstraction given in the right hand column. In accordance with the invention, the application of map 1100 results in the derivation of model checker input language 1200 (delineated by individual program code line numbers 1-303) shown in FIG.'s 12 and 13. Further, in accordance with the invention, a set of library functions is generated, illustratively shown as library functions 1400 in FIG. 14, for the model checker input language of FIG.'s 12 and 13. As will be appreciated, library functions 1400 (delineated by individual program code line numbers 1-153) provide the necessary semantics for defining terms in model checker input language 1200. In accordance with the preferred embodiment, model checker input language 1200 is directed to and useful with the SPIN model checker tool.

Significantly, one important feature of using maps, in accordance with the invention, is the capability provided to the user in defining precisely the appropriate level of detail at which the checking process will be applied, in a source independent manner. The map can contain "true" or "skip" as the translation (i.e., right hand column of program code 1110 described above) of any statement which indicates that this detail is abstracted away. Therefore, the map acts as a "filter" to filter out extraneous detail, in addition to, acting as a converter from the target programming language, e.g., C, to the verification model. The map also serves as a complete formalization of the linkage between source code and the verification model.

As described above, in accordance with the preferred embodiment of the invention, the verification of the properties of the event driven system is made subject to an environmental model during the testing and checking (see, FIG. 9, block 975) of the event driven software by the verification system. The environmental model formalizes particular assumptions, made by the user, about the environment in which the event driven program code is to be executed. For example, in the case of the illustrative telecommunications call processing application described herein, the environmental model might include formalizations directed to subscriber behavior, hardware responses, and communications network performance. In particular, FIG. 15 shows an illustrative environmental model 1500 (delineated by individual program code line numbers 1-80) for the telecommunications processing application described in FIG.'s 5 and 6. For example, code fragment 1510 of environmental model 1500 describes a formalization, i.e. a template, for a telecommunications device useful in the illustrative telecommunications application. In accordance with the preferred embodiment, the model checker, i.e., SPIN, will use model checker input language 1200 in conjunction with environmental model 1500 to determine whether the event driven system conforms with the user's desired execution properties and behaviors.

Advantageously, the separate definition of the map and environmental model, in accordance with the invention, ensure that little, if anything, in the verification infrastructure needs to be updated when routine changes are made in the original source code. That is, unless new basic types of statements are introduced in the source code, the verification process can be repeated without user intervention and the source code may be checked for continued compliance against a large library of essential correctness properties. Further, in accordance with the invention, a precise automaton model representative of the event driven code under test is automatically generated directly from the source code and verified with a logic model checker, e.g., SPIN.

For example, FIG. 16 shows an illustrative automaton model 1600 for a particular control state defined by the telecommunications processing application described in FIG.'s 5 and 6. More particularly, the control state depicted in FIG. 16 is the so-called "ring" control state defined in source code program 500 as control state 545 (see, FIG.'s 5 and 6). The "@ring" program statement in line 183 of source code program 500 begins the clear delineation of this particular control state from a source program viewpoint. In accordance with the testing and checking aspects of the invention, as described above, from this control state a precise automaton, e.g., automaton model 1600, is extracted. Automaton model 1600 clearly shows the transitions in and out of the "ring" control state 1610 and amongst other control states of the application, i.e., "digits_1" control state 1620, "idle" control state 1630, "conn" control state 1640, and "error" control state 1650. Automaton model 1600 also clearly illustrates the various events, i.e., event 1660 through event 1695, occurring in the illustrative application. Further, full automaton model 1700, shown in FIG. 17, is an illustrative full automaton model of the complete telecommunications processing application described in FIG.'s 5 and 6, and automatically generated in accordance with the invention.

The above-described embodiments of the invention employ a C source program written (see, e.g., FIG.'s 5 and 6) in accordance with the principles of the instant invention and tested in accordance with the principles of the invention of "the Testing Event Driven Software application" as described above. We have further realized that certain types of users, e.g. verification system programmers or software testing engineers, may wish to begin their system design process by defining the event driven in accordance with the specification format described above. For example, such users may employ the specification format set forth in "the Testing Event Driven Software application" to directly code the subject event driven system. Thus, in accordance with further embodiments of that invention, the specification is converted into a target programming language, e.g. C., for direct compilation and execution. In accordance with such further embodiments of the invention, a template is employed to facilitate such a conversion. The following is an illustrative C code template for use in converting this such state machine code to standard C for compilation and execution:

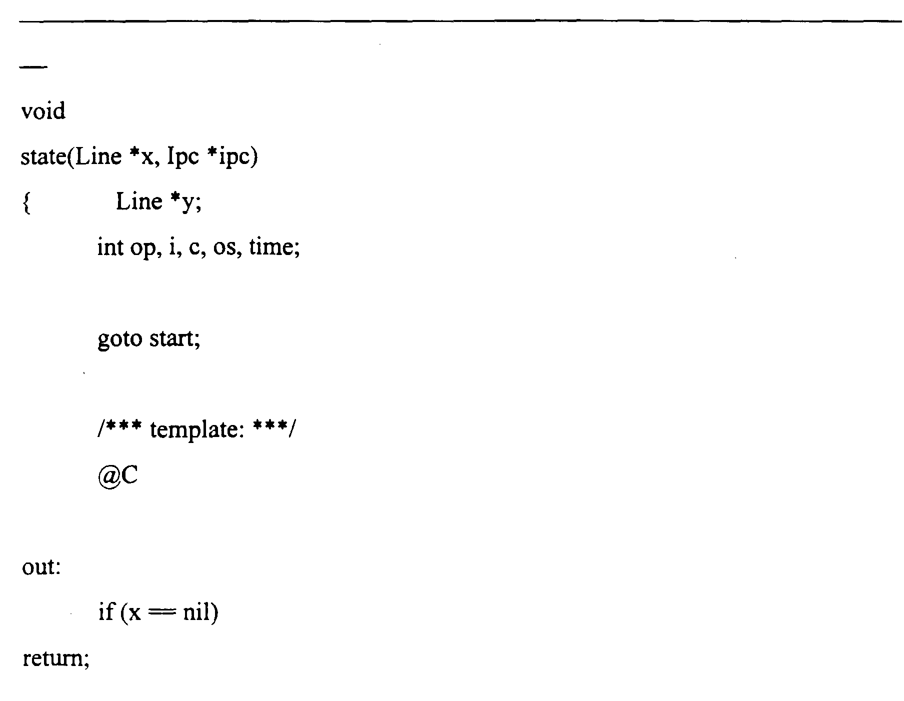

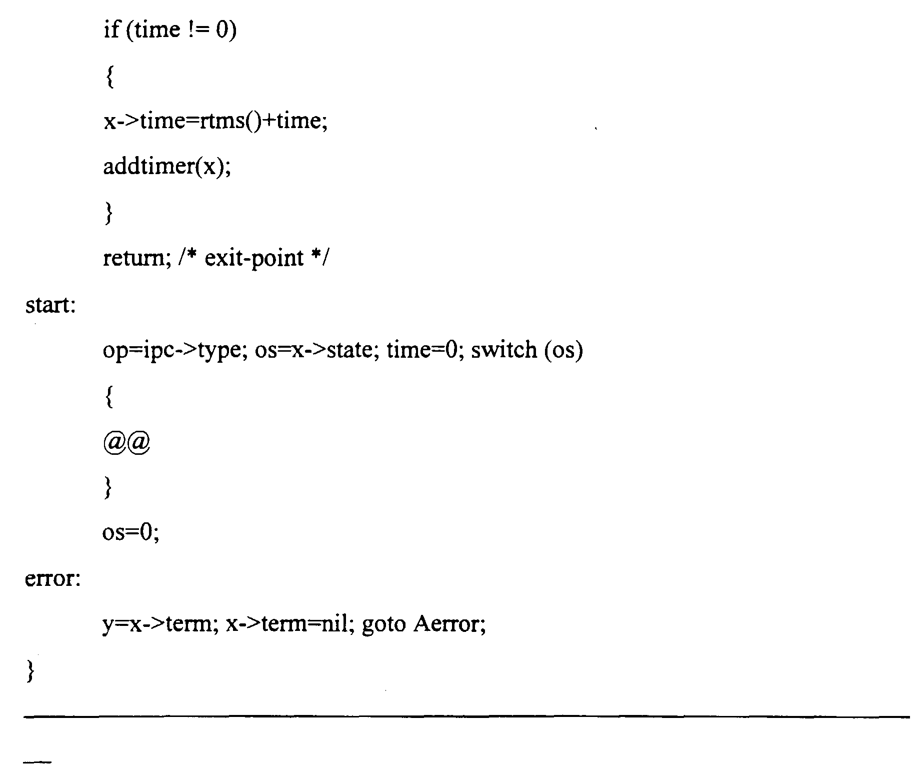

The above-described C code template provides the framework for a complete conversion of the state machine specification to C. As will be appreciated, the illustrative C code template can be executed by the model checker tool itself or on a separate machine. The template includes type definitions for the arguments that are passed to a routine called "state" that is used as the core of the conversion implementation. The routine must be called whenever an event occurs that relates to the subject event driven system. The template code further contains a place-holder "@C" for the state machine that is generated from the transition rules specified in accordance with the invention. The actual program code necessary for the generation of the state machine will be readily understood by those skilled in the art and need not be further detailed herein. At each call, the "start" routine executes and retrieves an event type and parameter value from the data structure that is used by the environment to store detailed information about the current event. The current state of the process is retrieved from the data structure in the first argument to the routine, and a so-called "C switch" is performed on this state value to establish the proper position in the transition rules. The short-hand symbol "@@" of the template is expanded by the tool into a full list of names of all control states, with matching jumps to the places in the generated, i.e., converted, C code where the code fragments for the transition rules of each state are placed. Advantageously, in accordance with these further embodiments of the invention, the specification is converted into a target programming language, e.g., C, for direct compilation and execution.

For example, FIG. 18 shows an illustrative computer system 1800 useful in executing event driven software code which is specified and written in accordance with the present invention. In particular, computer system 1800 includes conventional personal computer 1810 which is connected to display 1820 and keyboard 1830. As will be appreciated, information produced by personal computer 1810, e.g., during execution of particular event driven software code, may be displayed on display 1820 for access by a user of computer system 1800. The user, as a result of viewing display 1820, interacts with and controls personal computer 1810, in a conventional manner, using keyboard 1830. Further, mouse 1880, or other well-known pointing devices, may allow the user to provide additional inputs to personal computer 1810. Illustrative computer system 1800 further includes processor 1840 which, illustratively, executes event driven application software code which is specified and written in accordance with the present invention. For example, such event driven application software code may be loaded into personal computer 1810 via conventional diskette 1870 and thereafter stored in internal disk memory 1860. Further, execution of the code may require access and use of random access memory 1850 ("RAM") in a conventional manner. Thus, the user of computer system 1800 can execute software, specified and written in accordance with the present invention, to provide a wide variety of applications, e.g., an event driven system. Further, as will be appreciated, computer system 1800 may also be connected, in a conventional manner, to other computer systems or devices for execution of the particular application programs.

For example, computer system 1800 can be used to execute and test software, in accordance with the present invention, resulting in error trace 1900 as shown in FIG. 19. Error trace 1900 consists of program code 1910 (delineated by individual program code line numbers 1-47) and is an illustrative error trace, generated in accordance with the principles of the invention, for the telecommunications processing application described in FIG.'s 5 and 6. More particularly, the illustrative error trace 1900 shows how the checking process produces a scenario which directly identifies the presence of errors in the original source code of the event driven system. Further, error trace 1900 through program code 1910 identifies such errors in terms of programming level statements, e.g., C-level statements, that may be executed to reproduce the error. In the illustrative error trace 1900, the trace demonstrates in a direct sequence of C-program code statement (see, FIG. 9, program code 1920) executions that leads the event driven system into the illustrate state "@busy" with "Crdigit" being the first event to be processed. As can be seen and appreciated from error trace 1900, in conjunction with, C source program code 500 (in particular, control state 555 at line 223), there is no provision in the program code, i.e., a coding error, to anticipate the possible occurrence of this event. Advantageously, in accordance with the invention, a user can interpret error trace 1900 solely in terms of C-level execution statements without any specialized knowledge of the model itself or significant parts of the intermediate representations that are used in the checking process itself.

The foregoing merely illustrates the principles of the present invention. It will thus be appreciated that those skilled in the art will be able to devise various arrangements which, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the Applicant(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams herein represent conceptual views of illustrative circuitry embodying the principles of the invention. Similarly, it will be appreciated that any flowcharts, flow diagrams, state transition diagrams, pseudocode, program code, and the like represent various processes which may be substantially represented in computer readable medium and so executed by a computer, machine, or processor, whether or not such computer, machine, or processor, is explicitly shown.

## Claims

1. A computer program product taking the form of a computer-readable medium for executing a event driven system, the computer program product comprising:
a first source code segment for causing a computer to execute the event driven system; the first source code segment including a first plurality of instructions defining a plurality of control states of the event driven system, a second plurality of instructions defining a plurality of events of the event driven system, and a third plurality of instructions defining a plurality of actions of the event driven system, each control state of the plurality of control states having a individual identifier within the first plurality of instructions of the first source code segment, the individual identifier being a programming symbol which is common to all the identified control states; and
a second source code segment containing at least one plurality of instructions defining a sequential control of the computer in the executing the event driven system.

2. The computer program product of claim 1 wherein the plurality of control states have a causal relationship with eachother which is defined as a function of a sequence in which each control state appears in the first source code segment.

3. The computer program product of claim 2 wherein the sequence is defined as a function of the individual identifier associated with the control state.

4. The computer program product of claim 2 wherein a execution thread of the computer is identifiable directly from a viewing of the first source code segment.

5. The computer program product of claim 3 wherein the programming symbol is the ASCII "@" symbol.

6. A method of providing and controlling an event driven system, the method comprising:
defining a specification for the event driven system;
identifying a plurality of control states, a plurality of events, and a plurality of actions, from the specification;
specifying a first program source code segment, the first source code segment including a first plurality of instructions defining the plurality of control states, a second plurality of instructions defining the plurality of events, and a third plurality of instructions defining the plurality of actions, each control state of the plurality of control states having a individual identifier within the first plurality of instructions of the first source code segment, the individual identifier being a programming symbol which is common to all the identified control states;
specifying a second program source code segment containing at least one plurality of instructions defining a sequential control of a computer for the providing and the controlling of the event driven system, the first program source code segment and the second program source code segment, in combination, forming a event driven application source code program; and
executing, on the computer, the event driven application source code program to provide the event driven system.

7. The method of claim 6 wherein the plurality of control states have a causal relationship with eachother which is defined as a function of a sequence in which each control state appears in the first program source code segment.

8. The method of claim 7 wherein the sequence is defined as a function of the individual identifier associated with the control state.

9. The method of claim 8 wherein a execution thread of the computer is identifiable directly from a viewing of the event driven application source code program.

10. The method of claim 7 wherein the programming symbol is the ASCII "@" symbol.

11. The method of claim 9 wherein the sequential control of the computer includes a invocation of device drivers associated with the event driven system.

12. The method of claim 11 wherein the sequential control of the computer further includes controlling peripheral devices associated with the event driven system.

13. The method of claim 12 wherein the event driven system is a telecommunications network.

14. The method of claim 9 further including the operation of:
updating the first program source code segment as a function of the viewing.

15. The method of claim 14 wherein the updating includes adding a new control state to the plurality of control states, the new control not affecting the causal relationship of the sequence in which each control state appears in the first program source code segment.

16. A machine-readable medium having stored thereon a plurality of instructions, the plurality of instructions including a first code segment and a second code segment, the plurality of instructions including instructions that, when executed by a machine, cause the machine to execute a event driven system, the plurality of instructions having been defined by identifying a plurality of control states, a plurality of events, and a plurality of actions, associated with the event driven system, specifying the first code segment such that the first code segment includes a first plurality of instructions defining the plurality of control states, a second plurality of instructions defining the plurality of events, and a third plurality of instructions defining the plurality of actions, each control state of the plurality of control states having a individual identifier within the first plurality of instructions of the first code segment, the individual identifier being a programming symbol which is common to all the identified control states, and specifying the second code segment such that the second code segment contains at least one plurality of instructions defining a sequential control of the machine.

17. The machine-readable medium of claim 16 wherein the plurality of control states have a causal relationship with eachother which is defined as a function of a sequence in which each control state appears in the first code segment.

18. The machine-readable medium of claim 17 wherein the sequence is defined as a function of the individual identifier associated with the control state.

19. The machine-readable medium of claim 18 wherein the event driven system is a telecommunications service application.

20. The machine-readable medium of claim 19 wherein the telecommunications application includes a plurality of events associated with extending a telephone call through a communications network.

21. A telecommunications system comprising:
a plurality of telecommunications devices, each device having associated therewith a plurality of control states, a plurality of events, and a plurality of actions, for providing at least one telecommunications service;
at least one communications switch, the communications switch having a processor for executing program code in the providing of the telecommunications service, the program code having a first program source code segment, the first source code segment including a first plurality of instructions defining the plurality of control states, a second plurality of instructions defining the plurality of events, and a third plurality of instructions defining the plurality of actions, each control state of the plurality of control states having a individual identifier within the first plurality of instructions of the first source code segment, the individual identifier being a programming symbol which is common to all the identified control states, and having a second program source code segment containing at least one plurality of instructions defining a sequential control of the processor in the providing of the telecommunications service.

22. The telecommunication system of claim 21 wherein the plurality of control states have a causal relationship with eachother which is defined as a function of a sequence in which each control state appears in the first code segment.

23. The telecommunication system of claim 22 wherein the sequence is defined as a function of the individual identifier associated with the control state.

24. The telecommunication system of claim 23 wherein the telecommunications service includes extending a call between a calling party using a particular one of the telecommunications devices, through the communications switch, to a called party.

25. The telecommunication system of claim 23 wherein a execution thread of the processor is identifiable directly from a viewing of the first source code segment.

26. A method of programming a computer comprising:
receiving a series of programming language statements comprising a first source code segment and a second source code segment for causing the computer to execute a event driven system, the first source code segment including a first plurality of instructions defining a plurality of control states of the event driven system, a second plurality of instructions defining a plurality of events of the event driven system, and a third plurality of instructions defining a plurality of actions of the event driven system, each control state of the plurality of control states having a individual identifier within the first plurality of instructions of the first source code segment, the individual identifier being a programming symbol which is common to all the identified control states, the second source code segment containing at least one plurality of instructions defining a sequential control of the computer in executing the event driven system;
compiling the first code segment and the second source code segment into an object program in a memory of the computer; and
executing the object program in the computer to provide the event driven system.

27. The method of claim 26 wherein the plurality of control states have a causal relationship with eachother which is defined as a function of a sequence in which each control state appears in the first source code segment.

28. The method of claim 27 wherein the sequence is defined as a function of the individual identifier associated with the control state.

29. The method of claim 26 wherein a execution thread of the computer is identifiable directly from a viewing of the first source code segment.

30. The method of claim 27 wherein the series of programming language statements are written in a C programming language and the programming symbol is the ASCII "@" symbol.

31. The method of claim 30 wherein the compiling operation further includes: converting the individual identifiers within the first plurality of instructions of the first code segment to a equivalent programming statement in the C programming language.

32. A computer system comprising:
a processor;
a memory;
means for receiving a series of programming language statements in the memory, the series of programming language statements comprising a first source code segment and a second source code segment for causing the processor to execute a event driven system, the first source code segment including a first plurality of instructions defining a plurality of control states of the event driven system, a second plurality of instructions defining a plurality of events of the event driven system, and a third plurality of instructions defining a plurality of actions of the event driven system, each control state of the plurality of control states having a individual identifier within the first plurality of instructions of the first source code segment, the individual identifier being a programming symbol which is common to all the identified control states, the second source code segment containing at least one plurality of instructions defining a sequential control of the computer system in executing the event driven system;
means for compiling the first code segment and the second source code segment into an object program in the memory; and
means for executing the object program in the computer system to provide the event driven system.

33. The computer system of claim 32 wherein the plurality of control states have a causal relationship with eachother which is defined as a function of a sequence in which each control state appears in the first source code segment.

34. The computer system of claim 33 wherein the sequence is defined as a function of the individual identifier associated with the control state.

35. The computer system of claim 26 wherein a execution thread of the processor is identifiable directly from a viewing of the first source code segment.

36. The computer system of claim 34 wherein the series of programming language statements are written in a C programming language and the programming symbol is the ASCII "@" symbol.

37. The computer system of claim 36 wherein the compiling operation further includes:
means for converting the individual identifiers within the first plurality of instructions of the first code segment to a equivalent programming statement in the C programming language.
